# FASCICULE DE BREVET EUROPEEN

(11) **EP 1 053 155 B1**
(45) Date de publication et mention de la délivrance du brevet: **03.07.2002**
(21) Numéro de dépôt: 99902614.9
(22) Date de dépôt: 08.02.1999
(51) Int. Cl.: B60T 13/573

(54) **SERVOMOTEUR PNEUMATIQUE A REACTION MECANIQUE DYNAMIQUEMENT VARIABLE**
PNEUMATISCHER KRAFTVERSTÄRKER MIT DYNAMISCH VARIABLER REAKTION
PNEUMATIC SERVOMOTOR WITH DYNAMICALLY VARIABLE MECHANICAL REACTION

(30) Priorité: 12.02.1998 FR 9801665
(43) Date de publication de la demande: 22.11.2000
(73) Titulaire: Bosch Systemes de Freinage, 93700 Drancy (FR)
(72) Inventeur: LEVRAI, Roland, F-93240 Stains (FR)
(86) Numéro de dépôt international: FR9900266
(87) Numéro de publication internationale: WO9941124

(56) Documents cités:
- GB-A- 1 177 686
- PATENT ABSTRACTS OF JAPAN vol. 006, no. 126 (M-142), 10 juillet 1982 (1982-07-10) & JP 57 051558 A (AISIN SEIKI CO LTD;OTHERS: 01), 26 mars 1982 (1982-03-26)

## Description

La présente invention concerne un servomoteur pneumatique d'assistance au freinage.

Plus précisément, l'invention concerne un servomoteur comprenant : une enveloppe rigide; une cloison mobile délimitant, de façon étanche, une chambre avant et une chambre arrière à l'intérieur de l'enveloppe, la chambre avant étant en fonctionnement reliée à une première source de pression délivrant une première pression; un piston pneumatique monté coulissant dans une ouverture de l'enveloppe et se déplaçant avec la cloison mobile; un clapet à trois voies logé dans le piston pneumatique et susceptible d'adopter sélectivement un état de repos et un état d'actionnement, dans lesquels la chambre arrière est respectivement reliée à la première source de pression et à une seconde source de pression qui délivre une seconde pression présentant, par rapport à la première pression, une différence propre à faire apparaître sur la cloison mobile une force d'assistance agissant suivant une première direction axiale; un plongeur logé dans le piston pneumatique et mobile entre des première et seconde positions extrêmes pour lesquelles le premier clapet est respectivement dans son état de repos et dans son état d'actionnement; une tige de commande, propre à recevoir une force d'entrée agissant suivant la première direction axiale, pour déplacer le plongeur entre ses première et seconde positions extrêmes; une tige de poussée propre à transmettre une partie au moins des forces d'entrée et d'assistance; et des moyens de réaction interposés entre le plongeur et la tige de poussée pour exercer sur le plongeur, à l'encontre de la force d'entrée, une réaction qui croît avec la force d'assistance, ces moyens de réaction comprenant des première, seconde et troisième faces d'appui et une pluralité de billes enserrées entre ces trois faces d'appui, la première face d'appui étant constituée par une surface saillante et au moins partiellement conique du plongeur, la seconde face d'appui étant constituée par une surface rentrante et au moins partiellement conique du piston, et la troisième face d'appui étant constituée par une surface au moins partiellement perpendiculaire à la première direction axiale d'un plateau solidaire de la tige de poussée.

Des dispositifs de ce type sont connus dans l'art antérieur, tel qu'illustré par exemple par les brevets FR - 1 515 403, US - 3 470 697, et FR - 2 030 679.

Les recherches actuelles pour améliorer le freinage dans les situations d'urgence ont conduit à un regain d'intérêt pour ces dispositifs du domaine public, que l'invention se propose de perfectionner dans le but de permettre une diminution de la force de réaction en fonction de la vitesse d'actionnement du frein.

A cette fin, le servomoteur de l'invention est essentiellement caractérisé en ce que la première face d'appui présente au moins des première et seconde pentes dont la seconde succède à la première suivant une seconde direction axiale inverse de la première direction axiale, et en ce que les première et seconde pentes forment avec la seconde direction axiale des premier et second angles respectifs différents et non nuls, dont le second est inférieur au premier.

Grâce à ces caractéristiques, la réaction qu'oppose le servomoteur à la force d'entrée qui l'actionne prend une intensité qui dépend de la vitesse d'actionnement du frein.

Le servomoteur de l'invention peut en outre comprendre une rondelle élastique présentant un encombrement axial d'autant plus faible qu'elle est soumise à une force d'écrasement plus élevée, cette rondelle étant interposée entre le piston pneumatique et la tige de poussée pour ménager entre les seconde et troisième faces d'appui un espace qui diminue lorsque la force d'assistance augmente.

Grâce à ces caractéristiques, le servomoteur de l'invention peut présenter une courbe de réponse semblable à celle des servomoteurs actuels, qui utilisent un disque élastomère en tant qu'organe de réaction.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe d'un servomoteur connu de l'art antérieur (FR - 1 515 403);
- la Figure 2 est une vue en coupe de la partie antérieure du plongeur d'un servomoteur conforme à l'invention;
- la Figure 3 est une vue en perspective de la partie antérieure du plongeur d'un servomoteur conforme à l'invention;
- la Figure 4 est une vue en coupe partielle d'un servomoteur conforme à l'invention, représenté dans une position d'équilibre sous effort;
- la Figure 5 est une vue en coupe partielle d'un servomoteur conforme à l'invention, représenté dans un état transitoire d'actionnement rapide; et
- la Figure 6 est une vue en perspective partielle d'un servomoteur conforme à l'invention.

Le servomoteur pneumatique d'assistance de l'invention comprend, de façon connue en soi, une coquille avant 1 et une coquille arrière 2 formant ensemble une enveloppe rigide 3.

Une cloison mobile 4 sépare de façon étanche l'intérieur de cette enveloppe rigide 3 et y délimite une chambre avant 5 et une chambre arrière 6, la chambre avant 5 étant en fonctionnement reliée à une première source de pression D qui délivre une première pression Pd, relativement basse.

Un piston pneumatique 7, monté coulissant dans une ouverture 31 de l'enveloppe 3, se déplace avec la cloison mobile 4 et porte un clapet 8.

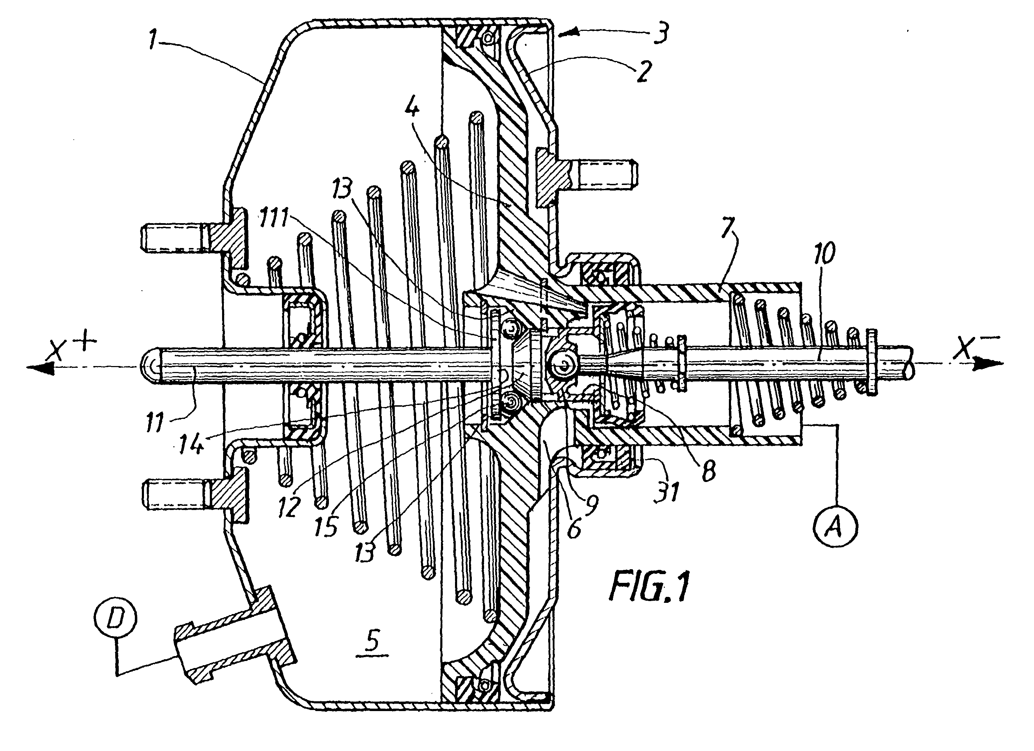

Ce clapet est susceptible d'adopter sélectivement un état de repos, qui est celui représenté sur la figure 1, et un état d'actionnement dans lequel il s'ouvre sur une seconde source de pression A.

Ainsi, la chambre arrière 6 est reliée à la première source de pression D lorsque le clapet 8 se trouve dans son état de repos, et reliée à la seconde source de pression A lorsque le clapet 8 se trouve dans son état d'actionnement.

Or, comme la seconde source de pression A est prévue pour délivrer une seconde pression Pa, par exemple la pression atmosphérique, supérieure à la première pression Pd, la cloison mobile 4 se trouve soumise à une force d'assistance agissant suivant une direction axiale X+ dès que le clapet 8 est placé dans son état d'actionnement.

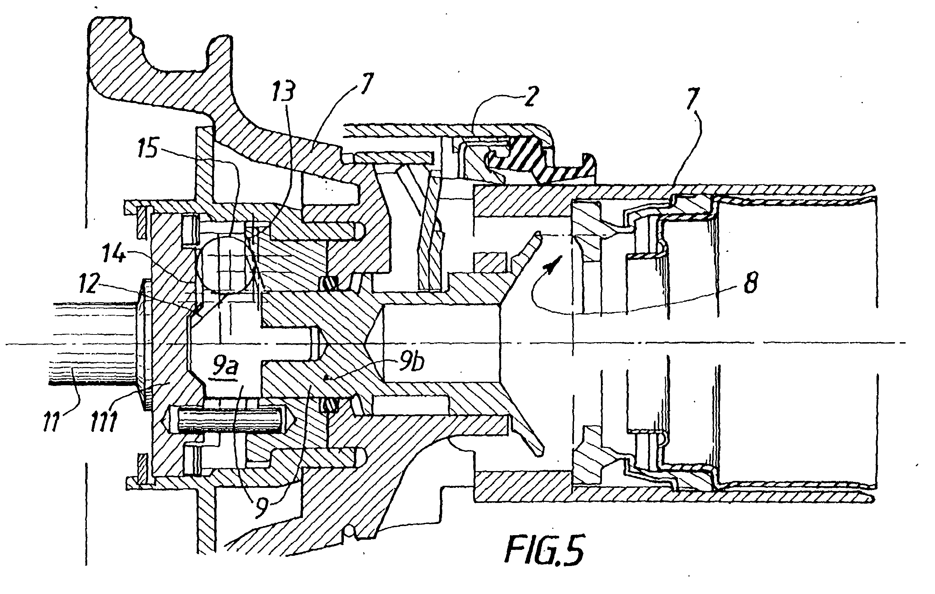

Ce clapet 8 comprend en fait un plongeur 9 logé dans le piston pneumatique 7 et mobile entre des première et seconde positions extrêmes, la première position extrême étant celle pour laquelle le premier clapet 8 est dans son état de repos (voir figure 1), et la seconde position extrême étant décalée suivant la direction axiale X+par rapport à la première position extrême, et permettant de placer le premier clapet 8 dans son état d'actionnement (voir figure 5).

Une tige de commande 10 est prévue pour recevoir une force d'entrée agissant suivant la direction axiale X+, et pour déplacer le plongeur 9 entre ses première et seconde positions extrêmes.

Une tige de poussée 11, se terminant par un plateau 111, est disposée dans l'alignement de la tige de commande 10 pour recevoir, et pour retransmettre à un maître-cylindre (non représenté), une force de sortie également orientée suivant la direction axiale X+ et se composant d'une partie de la force d'entrée et de la force d'assistance.

Comme le montre la figure 1, les servomoteurs connus comprennent également des moyens dits «de réaction», interposés entre le plongeur 9 et la tige de poussée 11, pour exercer sur le plongeur, à l'encontre de la force d'entrée, une réaction qui croît avec la force d'assistance.

Dans les servomoteurs du type considéré, ces moyens de réaction comprennent plus précisément trois faces d'appui 12, 13, 14 et une pluralité de billes 15 enserrées entre ces faces d'appui.

La première face d'appui 12 est constituée par une surface saillante du plongeur 9, qui est placée à la partie antérieure de ce dernier et qui présente au moins localement une forme approximativement conique.

La seconde face d'appui 13 est constituée par une surface rentrante du piston 7, qui est également placée à la partie antérieure du piston, autour de la face d'appui 12 du plongeur, et qui présente elle aussi, au moins localement, une forme approximativement conique.

Enfin, la troisième face d'appui 14 est constituée par la surface qu'offre le plateau 111, et qui est en substance perpendiculaire à la direction axiale X+.

Le fonctionnement de ces moyens de réaction est le suivant.

Lorsqu'une force d'entrée est appliquée sur la tige de commande 10, le plongeur 9 se rapproche de la tige de poussée 11 en écartant les unes des autres les billes 15, qui s'éloignent ainsi de l'axe X-X+ du servomoteur et qui avancent dans la direction X+ en montant sur la face d'appui 13 du piston 7.

Simultanément, le déplacement du plongeur 9 provoque l'ouverture du clapet 8, et l'admission d'air à la pression relativement haute Pa dans la chambre arrière 6, ce phénomène provoquant le déplacement de la cloison mobile 4, donc aussi celui du piston 7 suivant la direction X+.

Le déplacement du piston 7 induit à son tour un mouvement convergent des billes 15, qui ont ainsi tendance à remonter sur la face d'appui 12 du plongeur 9, donc à repousser ce dernier suivant la direction X-, à l'opposé de la direction X+.

Lorsque le déplacement de la tige de poussée 11 suivant la direction X+ rencontre une résistance sensible, la force d'entrée exercée sur le plongeur 9 par l'intermédiaire de la tige de commande 10, et la force d'assistance exercée sur le piston 7 par la pression différentielle à laquelle est soumise la cloison mobile 4 rentrent donc en concurrence pour définir la position radiale des billes 15, la force d'entrée subissant de la part de la force d'assistance une réaction qu'elle doit vaincre pour maintenir le clapet 8 ouvert.

L'invention, qui vise à perfectionner ces moyens de réaction, prévoit d'une part que la première face d'appui 12 présente par exemple au moins deux pentes P1, P2 formant avec la direction axiale inverse X- des angles respectifs a1, a2 différents et non nuls, la seconde pente P2 étant définie comme celle qui succède à l'autre suivant la direction axiale inverse X-, et prévoit d'autre part que le second angle a2 soit inférieur au premier angle a1.

L'intérêt et le fonctionnement de ces caractéristiques sont les suivants.

Lorsque le servomoteur est actionné par une force d'entrée évoluant de façon relativement lente, ce qui est le cas pour un freinage maîtrisé pour le contrôle anticipé de la vitesse du véhicule, les moyens de réaction agissent comme indiqué précédemment, les billes 15 étant en appui sur la pente P1 de la face d'appui 12 du plongeur 9, sur la face d'appui 13 du piston, et sur la face d'appui 14 du plateau 111.

En revanche, lorsque le servomoteur est actionné par une force d'entrée évoluant de façon rapide, comme c'est le cas pour un freinage d'urgence, le plongeur prend sur le piston une avance sensible, qui tient au temps que met la chambre arrière 6 pour se remplir.

Dans ces conditions, qui sont celles représentées à la figure 5, les billes 15 ne rencontrent plus la face d'appui 12 du plongeur 9 au niveau de sa pente P1, mais au niveau de sa pente P2.

Or, comme l'angle a2 de cette pente est plus faible que l'angle a1, la réaction exercée par le piston 7 sur le plongeur 9 par l'intermédiaire des billes 15 est réduite par rapport la valeur qu'elle prend dans le cas d'un freinage normal.

Ainsi, non seulement une plus grande proportion de la force d'entrée peut exploitée dans les situations de freinage d'urgence, mais il est également possible d'éviter que le conducteur, habitué à doser la force de freinage qu'il applique en fonction de la résistance qu'il rencontre, ne relâche instinctivement son effort dans ces situations.

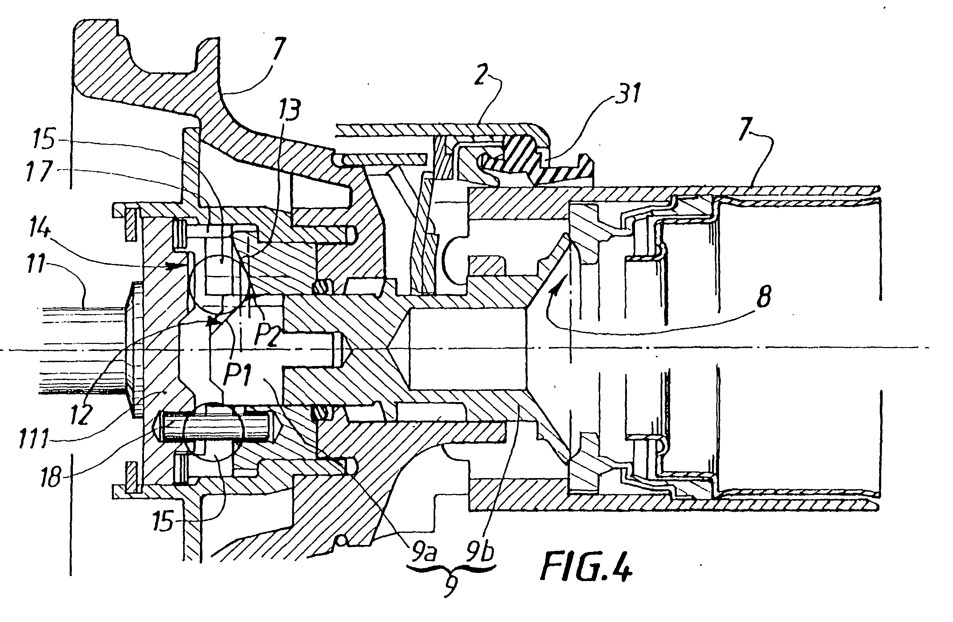

Comme le montrent les figures 4 à 6, le servomoteur de l'invention comprend également, de préférence, une rondelle élastique ondulée 16, interposée entre le piston pneumatique 7 et la tige de poussée 11.

Grâce à son ondulation, cette rondelle 16 présente un encombrement axial, c'est-à-dire une épaisseur apparente supérieure à l'épaisseur de la matière dont elle est constituée.

En outre, cette rondelle peut être écrasée élastiquement, c'est-à-dire que son encombrement axial est d'autant plus faible que la force d'écrasement à laquelle elle est soumise est plus élevée.

Dans ces conditions, la rondelle 16 ménage, entre la face d'appui 13 du piston 7 et la face d'appui 14 de la tige de poussée, un espace qui diminue lorsque la force d'assistance augmente, de sorte que les billes 15 ne sont enserrées entre les faces d'appui 12, 13, et 14 que lorsque la force d'assistance est supérieure à la force d'écrasement de la rondelle 16, cet agencement permettant de faire apparaître, dans la courbe de réponse du servomoteur, un saut caractéristique du fonctionnement des servomoteurs actuels.

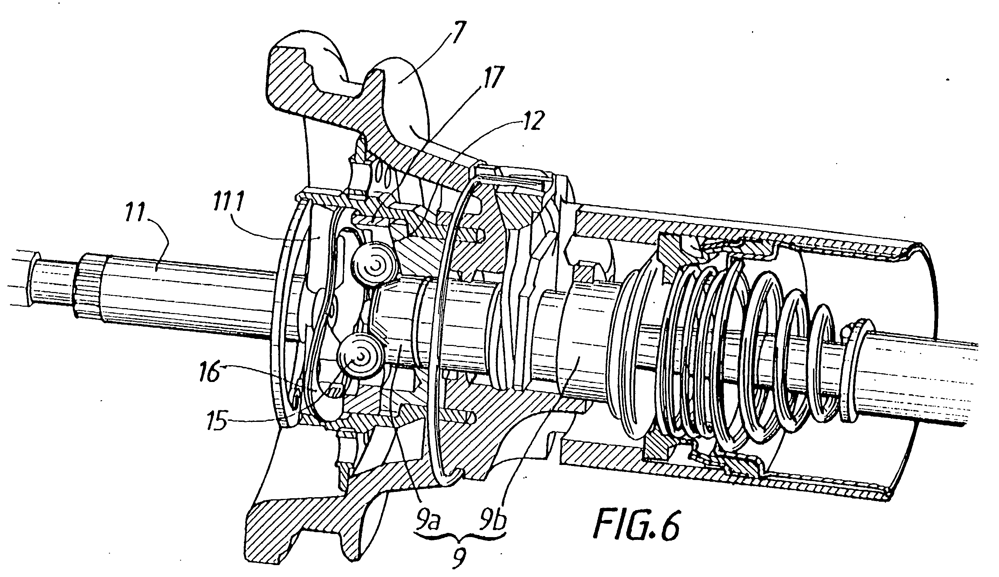

Comme le montrent les figures 4 et 6, le piston peut porter sur la rondelle 16 de façon seulement indirecte, par l'intermédiaire d'une bague 17.

Il peut également être utile de fabriquer le plongeur 9 en deux parties, ce dernier comprenant alors une partie antérieure 9a, de dureté élevée, sur laquelle est définie la face d'appui 12, et une partie postérieure 9b, qui n'a besoin de présenter qu'une dureté plus faible.

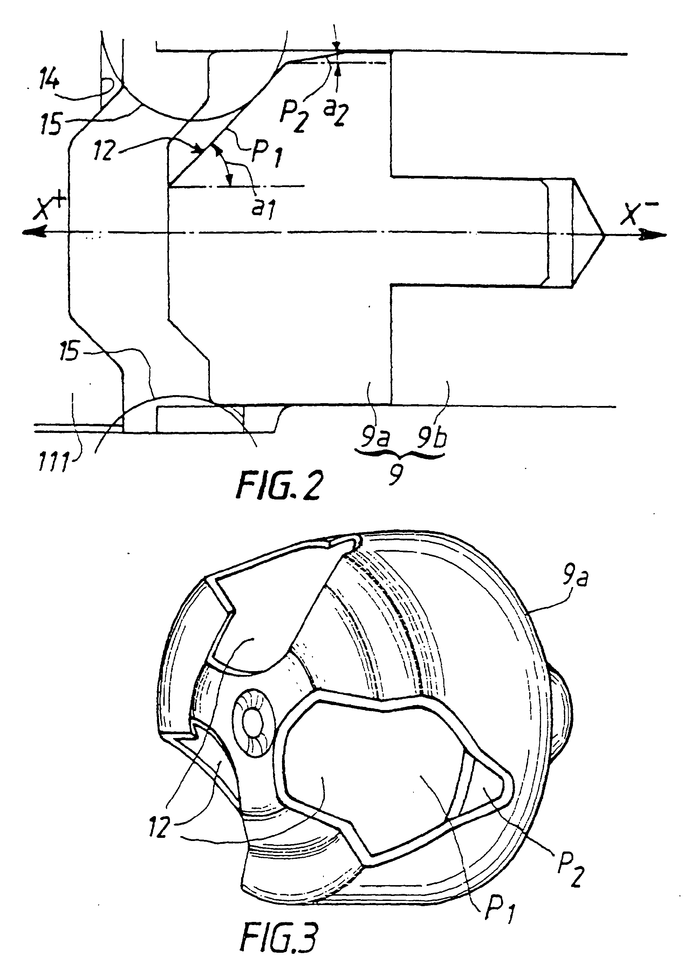

Comme le montre la figure 3, la face d'appui 12 peut en fait être réalisée sous forme d'empreintes non contiguës, adoptant à la fois une disposition d'ensemble conique et un profil individuel cylindrique pour mieux guider les billes 15, en l'occurrence au nombre de trois dans l'exemple illustré.

Enfin, un pion 18 peut être prévu (figure 4) entre le piston 7 et le plateau 111 pour caler angulairement ces deux pièces l'une par rapport à l'autre et parfaire leur guidage.

## Revendications

1. Servomoteur pneumatique d'assistance au freinage comprenant : une enveloppe rigide (3); une cloison mobile (4) délimitant, de façon étanche, une chambre avant (5) et une chambre arrière (6) à l'intérieur de l'enveloppe (3), la chambre avant (5) étant en fonctionnement reliée à une première source de pression (D) délivrant une première pression (Pd); un piston pneumatique (7) monté coulissant dans une ouverture (31) de l'enveloppe (3) et se déplaçant avec la cloison mobile (4); un clapet à trois voies (8) logé dans le piston pneumatique et susceptible d'adopter sélectivement un état de repos et un état d'actionnement, dans lesquels la chambre arrière (6) est respectivement reliée à la première source de pression (D) et à une seconde source de pression (A) qui délivre une seconde pression (Pa) présentant, par rapport à la première pression (Pd), une différence propre à faire apparaître sur la cloison mobile (4) une force d'assistance agissant suivant une première direction axiale (X+); un plongeur (9) logé dans le piston pneumatique et mobile entre des première et seconde positions extrêmes pour lesquelles le premier clapet (8) est respectivement dans son état de repos et dans son état d'actionnement; une tige de commande (10), propre à recevoir une force d'entrée agissant suivant la première direction axiale (X+), pour déplacer le plongeur (9) entre ses première et seconde positions extrêmes; une tige de poussée (11) propre à transmettre une partie au moins des forces d'entrée et d'assistance; et des moyens de réaction interposés entre le plongeur et la tige de poussée (11) pour exercer sur le plongeur (9), à l'encontre de la force d'entrée, une réaction qui croît avec la force d'assistance, ces moyens de réaction comprenant des première, seconde et troisième faces d'appui (12, 13, 14) et une pluralité de billes (15) enserrées entre ces trois faces d'appui, la première face d'appui (12) étant constituée par une surface saillante et au moins partiellement conique du plongeur (9), la seconde face d'appui (13) étant constituée par une surface rentrante et au moins partiellement conique du piston (7), et la troisième face d'appui (14) étant constituée par une surface au moins partiellement perpendiculaire à la première direction axiale (X+) d'un plateau (111) solidaire de la tige de poussée (11), **caractérisé en ce que** la première face d'appui (12) présente au moins des première et seconde pentes (P1, P2) dont la seconde (P2) succède à la première suivant une seconde direction axiale (X-) inverse de la première direction axiale (X+), et **en ce que** les première et seconde pentes (P1, P2) forment avec la seconde direction axiale (X-) des premier et second angles respectifs (a1, a2) différents et non nuls, dont le second (a2) est inférieur au premier (a1).

2. Servomoteur suivant la revendication 1, **caractérisé en ce qu'**il comprend en outre une rondelle élastique (16) présentant un encombrement axial d'autant plus faible qu'elle est soumise à une force d'écrasement plus élevée, cette rondelle étant interposée entre le piston pneumatique (7) et la tige de poussée (11) pour ménager entre les seconde et troisième faces d'appui (13, 14) un espace qui diminue lorsque la force d'assistance augmente.

## Patentansprüche

1. Pneumatischer Bremsunterstützungs-Servomotor mit: einem starren Gehäuse (3); einer beweglichen Trennwand (4), die in dichter Weise im Inneren des Gehäuses (3) eine vordere Kammer (5) und eine hintere Kammer (6) abgrenzt, wobei die vordere Kammer (5) beim Betrieb mit einer ersten Druckquelle (D) verbunden ist, die einen ersten Druck (Pd) liefert; einem Pneumatikkolben (7), der in einer Öffnung (31) des Gehäuses (3) verschiebbar angebracht ist und sich mit der beweglichen Trennwand (4) verstellt; einem Dreiwege-Ventil (8), das in dem Pneumatikkolben angeordnet und selektiv einen Ruhezustand und einen Betätigungszustand einnehmen kann, in denen die hintere Kammer (6) mit der ersten Druckquelle (D) bzw. einer zweiten Druckquelle (A) verbunden ist, die einen zweiten Druck (Pa) liefert, der relativ zum ersten Druck (Pd) eine Differenz aufweist, die an der beweglichen Trennwand (4) eine Unterstützungskraft entstehen läßt, die entlang einer ersten axialen Richtung (X+) wirkt; einem Tauchkolben (9), der in dem Pneumatikkolben angeordnet und zwischen einer ersten und einer zweiten Endstellung beweglich ist, bei denen sich das erste Ventil (8) in seinem Ruhezustand bzw. seinem Betätigungszustand befindet; einer Steuerstange (10), die eine Eingangskraft empfangen kann, die entlang der ersten axialen Richtung (X+) wirkt, um den Tauchkolben (9) zwischen seiner ersten und seiner zweiten Endstellung zu verstellen; einer Schubstange (11), die wenigstens einen Teil der Unterstützungskraft und der Eingangskraft übertragen kann; und Reaktionsmitteln, die zwischen dem Tauchkolben und der Schubstange (11) angeordnet sind, um auch den Tauchkolben (9) entgegen der Eingangskraft eine Reaktion auszuüben, die mit der Unterstützungskraft anwächst, wobei die Reaktionsmittel eine erste, eine zweite und eine dritte Abstützfläche (12, 13, 14) sowie eine Mehrzahl von Kugeln (15) aufweisen, die zwischen den drei Abstützflächen eingespannt sind, wobei die erste Abstützfläche (12) von einer vorstehenden und wenigstens teilweise konischen Fläche des Tauchkolbens (9) gebildet ist, wobei die zweite Abstützfläche (13) durch eine zurückgesetzte und wenigstens teilweise konische Fläche des Kolbens (7) gebildet ist und wobei die dritte Abstützfläche (14) gebildet ist durch eine wenigstens teilweise zur ersten axialen Richtung (X+) senkrechten Fläche einer Platte (111), die fest mit der Schubstange (11) verbunden ist, **dadurch gekennzeichnet, daß** die erste Abstützfläche (12) wenigstens eine erste und eine zweite Neigung (P1, P2) aufweist, von denen die zweite Neigung (P2) auf die erste Neigung in einer zweiten axialen Richtung (X-) folgt, die zur ersten axialen Richtung (X+) entgegengesetzt ist, und daß die erste und die zweite Neigung (P1, P2) mit der zweiten axialen Richtung (X-) einen ersten bzw. einen zweiten Winkel (a1, a2) bilden, die unterschiedlich und von Null verschieden ist, wobei der zweite Winkel (a2) kleiner als der erste Winkel (a1) ist.

2. Servomotor nach Anspruch 1, **dadurch gekennzeichnet, daß** er außerdem eine elastische Scheibe (16) aufweist, die eine axiale Abmessung aufweist, die um so kleiner ist, je mehr sie einer Zusammendrück-Kraft ausgesetzt ist, wobei die Scheibe zwischen den Pneumatikkolben (7) und die Schubstange (11) eingesetzt ist, um zwischen der zweiten und der dritten Abstützfläche (13, 14) einen Raum zu schaffen, der sich verringert, wenn sich die Unterstützungskraft erhöht.

## Claims

1. Pneumatic brake booster comprising: a rigid casing (3); a moving partition (4) delimiting, in leaktight fashion, a front chamber (5) and a rear chamber (6) inside the casing (3), the front chamber (5) in operation being connected to a first source of pressure (D) delivering a first pressure (Pd); a pneumatic piston (7) slidably mounted in an opening (31) of the casing (3) and moving with the moving partition (4); a three-way valve (8) housed in the pneumatic piston and capable selectively of adopting a state of rest and an actuating state, in which states the rear chamber (6) is respectively connected to the first source of pressure (D) and to a second source of pressure (A) which delivers a second pressure (Pa) which, relative to the first pressure (Pd), has a difference capable of making a boost force acting in a first axial direction (X+) appear on the moving partition (4); a plunger (9) housed in the pneumatic piston and able to move between a first and a second extreme position, for which positions the first valve (8) is respectively in its state of rest and in its actuating state; an operating rod (10) capable of receiving an input force acting in the first axial direction (X+) in order to move the plunger (9) between its first and its second extreme positions; a push rod (11) capable of transmitting at least part of the input and boost forces; and reaction means inserted between the plunger and the push rod (11) for exerting on the plunger (9), against the action of the input force, a reaction which increases with the boost force, these reaction means comprising a first, a second and a third bearing face (12, 13, 14) and a number of balls (15) trapped between these three bearing faces, the first bearing face (12) consisting of a projecting and at least partially conical surface of the plunger (9), the second bearing face (13) consisting of a re-entrant and at least partially conical surface of the piston (7), and the third bearing face (14) consisting of a surface which is at least partially perpendicular to the first axial direction (X+) of a plate (111) secured to the push rod (11), **characterized in that** the first bearing face (12) has at least a first and a second slope (P1, P2), the second (P2) of which follows on from the first in a second axial direction (X-) which is the opposite of the first axial direction (X+), and **in that** the first and second slopes (P1, P2) make, with the second axial direction (X-), a first and a second respective angle (a1, a2) which are different and non-zero, the second (a2) of which is smaller than the first (a1).

2. Booster according to Claim 1, **characterized in that** it further comprises an elastic washer (16), the axial bulk of which is all the smaller, the higher the crushing force to which it is subjected, this washer being inserted between the pneumatic piston (7) and the push rod (11) so as to form between the second and third bearing faces (13, 14) a space which decreases as the boost force increases.
